# EUROPEAN PATENT SPECIFICATION

(11) **EP 2 278 871 B1**
(45) Date of publication and mention of the grant of the patent: **10.07.2019**
(21) Application number: 09742893.2
(22) Date of filing: 08.05.2009
(51) Int. Cl.: A01G 9/14

(54) **METHOD OF CONSTRUCTING A CULTIVATION AND/OR TRANSPORT TABLE, AND CULTIVATION AND/OR TRANSPORT TABLE**
VERFAHREN ZUR KONSTRUKTION EINES ZUCHT- UND/ODER TRANSPORTTISCHES SOWIE ZUCHT- UND/ODER TRANSPORTTISCH
PROCÉDÉ DE CONSTRUCTION D'UNE TABLE DE CULTURE ET/OU DE TRANSPORT, ET TABLE DE CULTURE ET/OU DE TRANSPORT

(30) Priority: 09.05.2008 NL 2001570
(43) Date of publication of application: 02.02.2011
(73) Proprietor: Bosman Van Zaal B.V., 1432 DG Aalsmeer (NL)
(72) Inventor: VAN ZAAL, Franciscus Johannes Maria, 1428 RW Vrouwenakker (NL); WIJFJES, Theodorus Gerardus Maria, 2441 GD Nieuwveen (NL); RADEMAKER, Hendricus Cornelis Johannes, 1426 AG De Hoef (NL)
(74) Representative: V.O.
(86) International application number: PCT/NL2009/050245
(87) International publication number: WO 2009/136790

(56) References cited:
- EP-A1- 1 955 587
- WO-A1-96/30611
- CA-C- 2 055 214
- NL-C2- 1 032 180

## Description

The invention relates to a method for constructing a cultivation and/or transport table.

The invention also relates to a cultivation and/or transport table.

As a rule, cultivation and/or transport tables are deployed for internal transport and cultivation of crops, such as, for instance, flowers, plants, fruits, fungi and the like, for instance in greenhouses for horticulture. In the greenhouses, the cultivation and/or transport tables are guided over rails, to which end the tables and/or the rails may be provided with rollers. Cultivation and/or transport tables provided with such rollers are also called roller containers. During the internal transport, the crops may be sprayed with water or be provided in another manner with nutrients and/or light. When the plants and/or flowers in the cultivation and/or transport tables have grown sufficiently, they are transported to an external location for instance to be sold, while the cultivation and/or transport table remaining behind is stored without load and/or deployed again.

Cultivation and/or transport tables can also be fixedly disposed in a greenhouse.

Usually, in such internal cultivation systems, hundreds or thousands of cultivation and/or transport tables are deployed simultaneously. The cultivation and/or transport tables are, for instance, approximately one or two meters wide and a few meters long, and can be loaded with crop over the entire surface. For saving weight and from a viewpoint of cost efficiency, the cultivation and/or transport tables are typically manufactured from aluminum.

In use, the cultivation and/or transport tables may be automatically or manually guided along the rails, with the rearmost cultivation and/or transport tables pushing the foremost. Owing to this pushing, great forces are exerted on the frame parts of the table. Conventional screw connections are disadvantageous because, as a rule, the screws will come loose due to the many shocks of the table. Furthermore, the screws can project outside the contour of the table so that they can damage the surrounding. Nowadays, connections between frame parts are often welded to prevent the connections from coming detached under the influence of the forces mentioned.

A cultivation table with a screw connection for connecting profiles is described in, for instance, Dutch patent specification NL2001570. Here, too, with frequent use, the screws will shake loose.

In WO96/30611, a rod construction is shown for coupling the leg of a cultivation table to a cross bar. With this connection, a lip is inserted at the end of a first, horizontal profile part forming the cross bar, through a slit-shaped opening into the second, upstanding profile part forming the leg, and be hooked therein. In the first profile part, adjacent the lip, an incision is provided in which a wedge is driven which clamps between a wall of the incision and the outside of the leg, while a hooking element is provided which engages a notch in this wall of the incision so that the wedge can no longer be released from the incision. The wedge projects slightly above the top side of the first profile, and abuts against a top side thereof, for obtaining a good confinement.

Publication CA 2055214 describes the use of self tapping screws for connecting an inverted Y-shaped rail to an underlying supporting channel.

Publication WP 1955587 describes a structure for cultivating plants having a series of platforms that are supported by support means. The support means comprise a pair of longitudinal support members adapted to be inserted in corresponding longitudinal seats which are formed integrally on the lower surface of the platforms at a top side of the longitudinal support members. At a bottom side, the longitudinal support members are supported by plastic stand members. The stand members have upwardly extending fingers that engage the inner cavity of the inverted U-shaped longitudinal members.

An object of the invention is to provide a good alternative to the above-mentioned cultivation and/or transport tables.

This object and/or other objects can be achieved through a method according to claim 1.

With such a method, a cultivation and/or transport table can be constructed from separate profiles, wherein, by combining a clamping connection and a second connection, a firm connection is achieved by the connecting element. The cultivation and/or transport table can also be relatively easily assembled and disassembled. Also when the cultivation and/or transport table experiences relatively high forces, for instance through collisions with other cultivation and/or transport tables and/or shocks and/or heavy loads, the connection can hold out.

An advantage can be that the separate profiles and/or other parts of the cultivation and/or transport table can be stored in a storage space when the cultivation and/or transport table is not used, thus occupying little storage when compared to conventional welded cultivation and/or transport tables. Also, separate cultivation and/or transport table parts can be replaced relatively simply, without the entire cultivation and/or transport table needing to be replaced. When the cultivation and/or transport table is taken into use, the profiles are assembled.

In a cultivation table according to the invention, preferably, at least one of the profiles is a profile, in particular an extrusion profile, which is open to one side, while at this side, at least one edge is provided, behind which a part of the other profile can be hooked, at a random location. With it, the other one of the two profiles can be placed at any position along the length of the profile, so that a great flexibility is obtained in the structure of a table. The extrusion profile mentioned can simply be made to length and be assembled. Incidentally, instead of extrusion, also, rolling or a similar technique can be utilized.

Another advantage is the limited volume upon transport when compared to a welded container. The volume reduction can be up to 95% of the transport volume.

This object and/or other objects can also be achieved by a cultivation and/or transport table according to claim 7.

A cultivation and/or transport table according to the invention can be assembled relatively easily, and preferably also be disassembled relatively easily, so that it takes up little space when stored. Through the double connection method, a stable connection is enabled in an advantageous manner, also when great forces are exerted on the cultivation and/or transport table. The connecting element preferably projects through the interconnected profiles, the connecting element comprises, for instance, a continuous element such as a screw, pin, nail or the like. When the connecting element is removed, the cultivation and/or transport table can be disassembled relatively easily.

Further advantageous embodiments according to the invention are represented in the subclaims and will also appear from the description, in which the invention is described in further detail in several exemplary embodiments on the basis of the appended drawings. In the drawing:
Fig. 1 shows a schematic side view of cultivation and/or transport tables on rails;
Fig. 2 shows a schematic top plan view of a cultivation and/or transport table frame;
Fig. 3A shows a cross section in front view of a part of the cultivation and/or transport table, where the connecting element has not been tensioned yet;
Fig. 3B shows a cross section in front view of a part of the cultivation and/or transport table, in connected condition;
Fig. 4 shows a perspective view of an end face of a cultivation and/or transport table frame;
Fig. 5 shows a cross section in front view of a part of the cultivation and/or transport table, in connected condition;
Figs. 6A-E show cross sections in front view of different embodiments of parts of the cultivation and/or transport table.

In this specification, identical or corresponding parts have identical or corresponding reference numerals. In the drawing, embodiments are shown merely by way of example. The elements used therewith are mentioned merely by way of example and should not be construed to be limitative in any manner. The proportions of the embodiments shown in the Figures can be represented in a schematic and/or exaggerated manner and should not be understood to be limitative in any manner.

A method according to the invention can be directed towards the construction of a cultivation and/or transport table, in particular but not exclusively for use in growing spaces, where a first and a second profile are interconnected at an angle, preferably an approximately right angle, to each other for forming a cultivation and/or transport table frame. Here, a profile part of the first profile can engage behind a profile part of the second profile, while the first profile and second profile are interconnected with the aid of a connecting element, all this in a manner that a clamping of the first section in the second section is achieved.

The first profile can slide along a supporting surface of the second profile, against an abutting surface of the second section, while the supporting surface is at an oblique angle to the abutting surface. In particular during connection to the first connecting element, the first profile can slide along the second profile, for instance along the supporting surface. During connection to the connecting element, the first profile can deform, whereby a clamping of the first profile in the second profile is achieved.

In a cultivation table according to the invention, preferably, at least one of the profiles is a profile, in particular an extrusion profile, open to one side, wherein at least one edge is provided on the side behind which a part of the other section can be hooked, at a random location.

At least said first and second profile of the cultivation and/or transport table are preferably disassembled for storage and/or transport and/or assembled only after storage and/or transport.

A cultivation and/or transport table according to the invention can comprise a frame, in particular an aluminum frame, of which longitudinal and cross girders form part. The longitudinal girders and cross girders can be connected by one of the methods as described hereinabove. Such a table can be provided with at least a first and a second section which are interconnected at an angle, preferably an approximately straight angle, and thus form at least a part of a cultivation and/or transport table frame. The first profile and the second profile can be interconnected with the aid of a connecting element, while a profile part of the first profile engages behind a profile part of the second profile. Here, said profile part of the first profile can extend between profile parts of the second profile, whereby clamping of the first profile in the second profile is achieved.

According to the invention, further, a construction kit can be provided for a cultivation and/or transport table as described herein, provided with at least two of these first profiles, at least two of these second profiles, and said connecting element. Naturally, such a construction kit can be utilized for application of one of the methods mentioned.

It is advantageous when the connecting element extends adjacent a bottom side of at least one of the profiles, so that at the top side thereof, an almost smooth transition can be obtained between the first and second profile. Thus, the risk can be reduced that placement on and movement of cultivation trays and the like over the table is hindered by connecting means. A cultivation table can preferably be assembled with standard connecting means such as bolts, screws, blind rivets or the like.

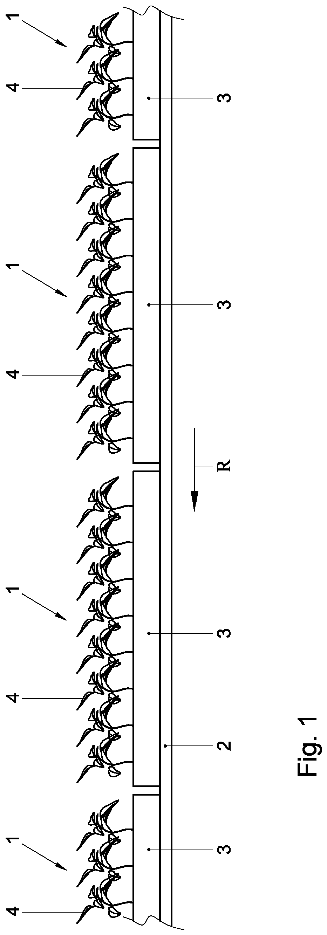

In Fig. 1, a series of cultivation and/or transport tables 1 is shown which are guided on a guide 2 in a particular direction R. Guiding the table 1 can take place, for instance, by means of rollers below the cultivation and/or transport table 1 and/or in that the guide 2 is provided with rails, rollers, a conveying belt and/or other advancing means. The table 1 comprises, for instance, a relatively large, flat frame 3 in which a tray or plate with, for instance, growth substrate and/or crops 4 and/or pots or trays with crops can be held. In practice, several guides 2 with cultivation and/or transport tables 1 can be provided side by side in a greenhouse, while the cultivation and/or transport tables 1 are guided over the guides 2 along sources of nutrition which provide the crops 4 and/or the substrate with nutrients, in the form of, for instance, light and/or water.

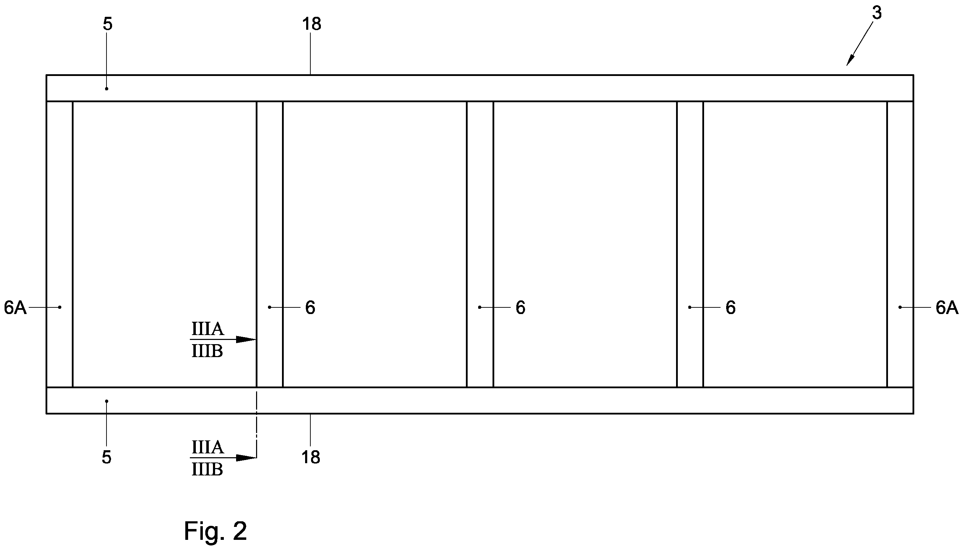

In Fig. 2, schematically in top plan view, a frame 3 of a cultivation and/or transport table 1 is shown. The frame 3 is provided with longitudinal profiles 5 which are connected to transverse profiles 6, 6A. In particular, two longitudinal profiles 5 and several transverse profiles 6, 6A are provided. The transverse profiles 6, 6A also comprise end transverse profiles 6A. Preferably, the profiles 5, 6, 6A comprise aluminum extrusion profiles and have a longitudinal and cross girder function in the frame 3. Preferably, the longitudinal and transverse profiles 5, 6, 6A are at a relatively straight angle to each other. The transverse profiles 6, 6A extend between the longitudinal profile 5. Below the longitudinal and/or transverse profiles 5, 6, 6A for instance guide means, such as, for instance, rollers, are provided for guiding the cultivation and/or transport table 1 in a longitudinal and/or transverse direction R.

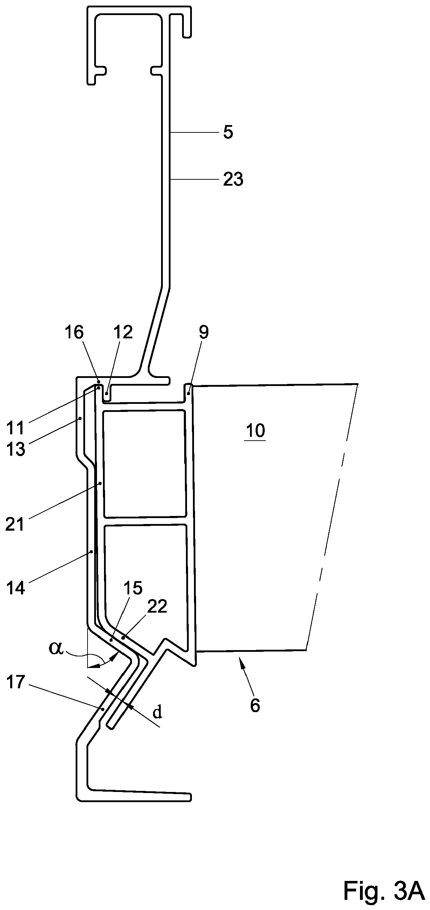

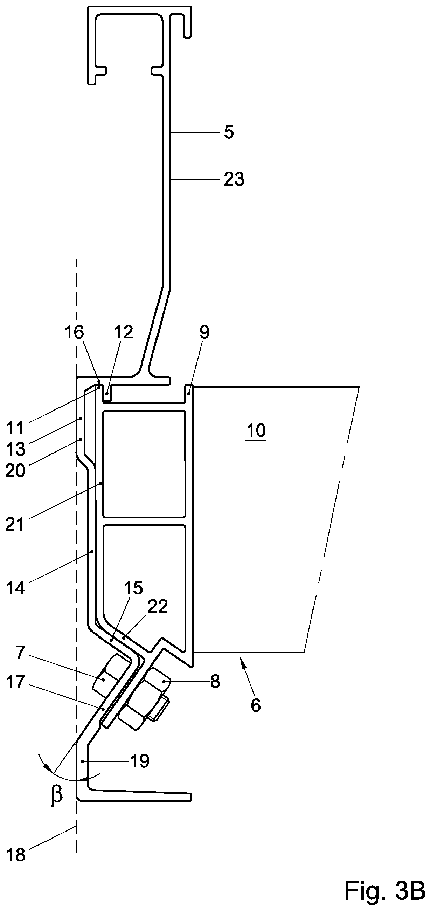

In Fig. 3A, 3B, an embodiment is shown of a longitudinal and a transverse profile 5, 6 in a pre-assembled and in an assembled condition, respectively. The transverse profile 6 comprises a connecting profile 9 which extends approximately parallel to the longitudinal profile 5. This connecting profile 9 is fixedly connected by means of, for instance, a welding connection, to one, preferably both ends of a middle profile 10, which middle profile 10 extends over approximately the entire length of the transverse profile 6. Preferably, a transverse profile 6 comprises a middle profile 10 having a connecting profile 9 on both sides. The connecting profile 9 and the middle profile 10 can both comprise aluminum extrusion profiles.

As can be seen in Fig. 3b, the longitudinal and the transverse profile 5, 6 are interconnected by a connecting element 7 which extends through both the longitudinal profile 5 and the transverse profile 6 and presses the profiles 5, 6 together over, for instance, a distance d of approximately one or a few millimetres. The connecting element 7 comprises, for instance, a bolt and a nut 8. In other embodiments, the connecting element 7 comprises a nail, blind rivet, pin or the like. Preferably, the connecting element 7 is selected such that it presses the profiles 5, 6 together, while the connecting element 7 can be disassembled and reassembled at a later stage for uncoupling and reconnecting, respectively, the profiles 5, 6. In another embodiment, the connecting element may comprise a weld. The connecting element 7 can form a separate element, but could, in principle, also be fixedly connected to the end of the transverse profile 6, while it can for instance be put through the longitudinal profile 5.

As can be seen in Fig. 3A and 3B, a first projection 11 of the transverse profile 6 engages behind a second projection 12 of the longitudinal profile 5. In particular, the first projection 11 extends between the second projection 12 and a part 13 of the longitudinal profile 5 located opposite the second projection 12. Also because the first projection 11 engages behind the longitudinal profile 5, preferably behind the second projection 12, a clamping connecting between the profiles 5, 6 can be achieved, while the connecting element 7 prevents the profiles 5, 6 from sliding further relative to each other.

In one embodiment, the longitudinal profile 5 may be provided with a first abutting surface 14 against which abuts the transverse profile 6. The longitudinal profile 5 is preferably provided with a supporting surface 15 extending at an angle α, preferably an oblique angle α, to the first abutting surface 14, and to an outer contour 18 of the frame 3. This angle α is for instance between approximately 30° and 60°, in particular between 40 and 50°, more particularly approximately 45°. The outer contour 18 can be determined by, for instance, outer profile parts 19, 20 of the longitudinal profile 5. The supporting surface 15 supports at least partly the transverse profile 6. At the far side of the supporting surface 15, a second abutting surface 16 may be provided at an angle, preferably an approximately straight angle, to the abutting surface 14, against which the transverse profile 6 abuts. Preferably, the first projection 11 abuts against the second abutting surface 16 and against the second projection 12. The transverse profile 6 preferably extends partly between the supporting surface 15 and the second abutting surface 16 and between said first abutting surface 14 of the longitudinal profile 5 and the second projection 12.

In one embodiment, the longitudinal profile 5 is also provided with a fastening surface 17 through which the connecting element 7 extends. This fastening surface 17 is, for instance but not necessarily, at an oblique angle β to an outer contour 18 of the longitudinal profile 5 and/or the abutting surface 14, and/or for instance at an approximately straight angle to the supporting surface 15. This angle β may be between, approximately, 30 and 60°, in particular between 40 and 50°, more particularly approximately 45°. The angle β can also be straight. Owing to the oblique angle β of the fastening surface 17 to the outer contour 18, it can be enabled that the connecting element 7 does not project outside the outer contour 18 of the cultivation and/or transport table 1 (see also Fig. 2).

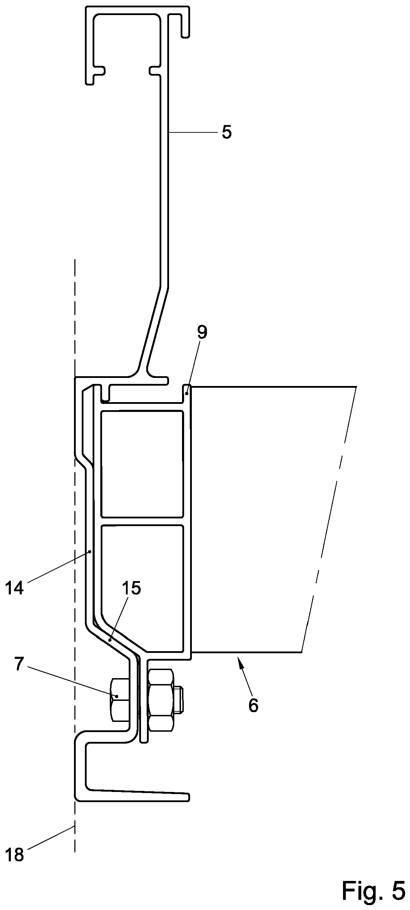

The connecting element 7 preferably extends within the outer contour 18, as can be seen in, for instance, Figs. 3A, 3B and 5.

The connecting profile 9 of the transverse profile 6 is preferably provided with a third abutting surface 21 which, in connected condition, abuts at least partly against the abutting surface 14 of the longitudinal profile 5. At an angle to this third abutting surface 21, preferably, a second supporting surface 22 is provided, which abuts, in connected condition, at least partly against the supporting surface 15 of the longitudinal profile 5.

Upon connection of the profiles 5, 6, first the first projection 11 of the transverse profile 6 is for instance placed behind the second projection 12 of the longitudinal profile 5. After this, the second supporting surface 22 of the transverse profile 6 is set against the supporting surface 15 of the longitudinal profile 5. Thus, already some clamping of the transverse profile 6 in the longitudinal profile is achieved. The connecting profile 9 preferably extends in the same direction as, in particular parallel to, the longitudinal profile 5. Then, the profiles 5, 6 are pressed together, so that a part of the connecting profile 9 slides along the longitudinal profile 5, into a clamped condition. In particular, the second supporting surface 22 of the connecting profile 9 slides somewhat upwards along the supporting surface 15 of the longitudinal profile 5, so that the transverse profile 6 and in particular the first projection 11 are pressed somewhat in the direction and/or against the second abutting surface 16, and against the second projection 12. The transverse profile 6, in particular the connecting profile 9, is thus clamped to some extent between the abutting surface 14 and the second projection 12, and/or between the second abutting surface 16 and the supporting surface 15.

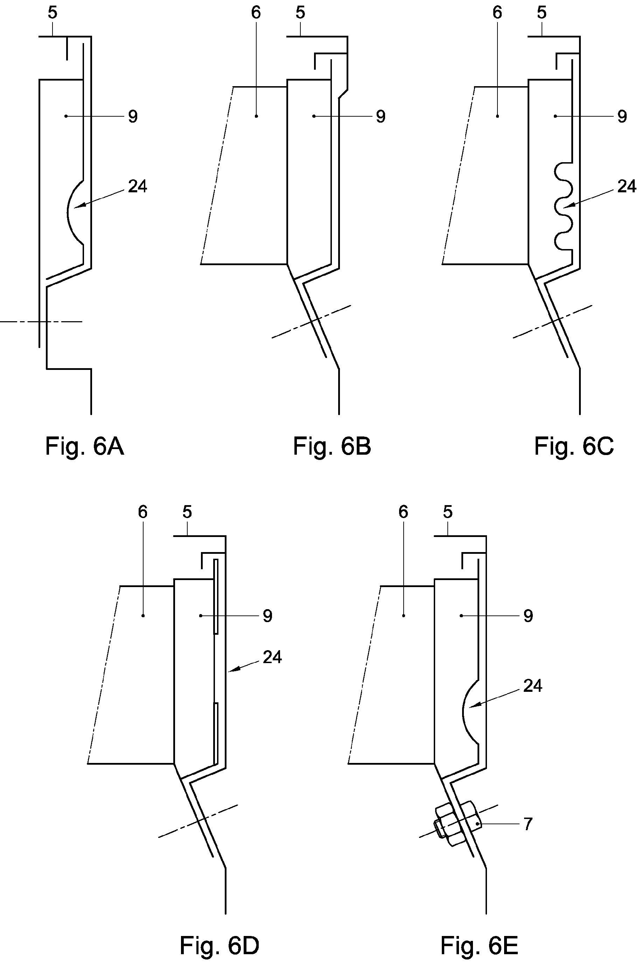

In a preferred embodiment, the transverse profile 6, in particular the connecting profile 9, slides slightly upwards along the oblique angle α of the supporting surface 15, while the connecting element 7 is provided. As a result, the connecting profile 9 presses against the abutting surface 14 of the longitudinal profile 5 whereby stress is caused in the connecting profile 9. As a result, the transverse profile 6, in particular connecting profile 9 may deform to some extent. The third abutting surface 21 may slightly bend. Owing to this deformation, a clamping of the connecting profile 9 in the transverse profile is achieved, in particular between the second abutting surface 16 and the supporting surface 15, and/or between the abutting surface 14 and the second projection 12. The connecting profile 9 can for instance be designed for achieving an advantageous elastic deformation, such as shown in some embodiments in Figs. 6A-E, in which features 24 are included for achieving a particular spring action in the connecting profile 9. These features 24 may comprise a springy structure.

In another embodiment, stress may be caused in the material of the abutting surface 14 in that the third abutting surface 21 of the connecting profile 9 is pressed against the abutting surface 14 of the longitudinal profile 5. A thus caused bending may be located at a distance of the connecting element 7, for instance at the location of the first or second abutting surface 14, 16 and/or the part 13 of the longitudinal profile 5 located between the first and second abutting surface 14, 16. Owing to the strong connection, in particular the clamping between the first and/or second abutting surface 14, 16 and the supporting surface 15, any dislodging of the connecting element 7 that may occur can be prevented.

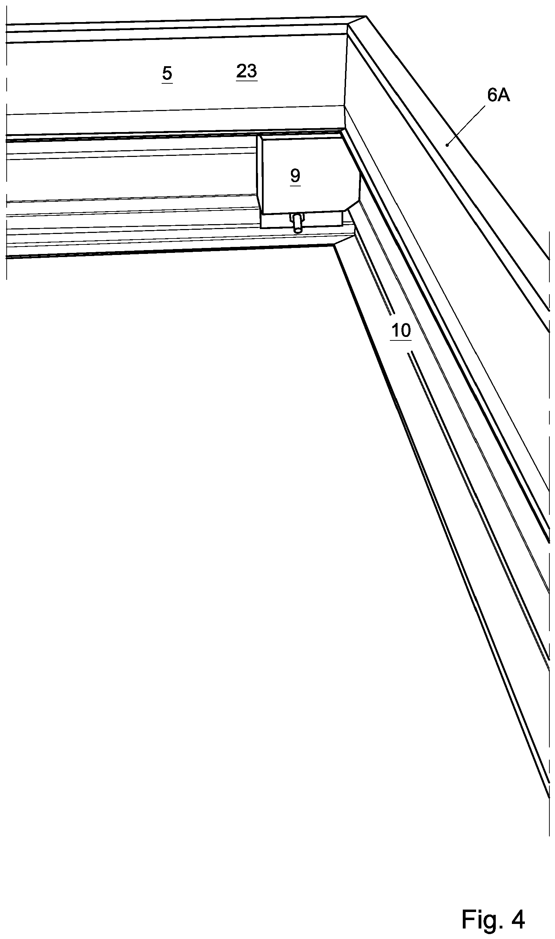

The end transverse profiles 6A too, for instance provided at the end faces of the cultivation and/or transport table frame 3 (see Fig. 4) can be connected to the longitudinal profile 5 in the above-described manner. For instance also an end transverse profile 6A is provided with such a connecting profile 9 and a middle profile 10.

In one embodiment, the longitudinal profile 5 is provided with an upper edge 23, which upper edge 23 can form the edge of the cultivation and/or transport table 1. Within the edge 23, a plate or tray, or several plates or trays intended for the substrate and/or the crop 4 may rest on the transverse profiles 6. Here, the edge 23 functions as a wall.

By using the connecting element 7 the cultivation and/or transport table 1 can be disassembled and transported and stored while saving space. Assembly and disassembly can take place in a simple and efficient manner, while a solid connecting is achieved, in particular through a combination of a clamping connection of the profiles 5, 6 directly onto each other, and a second connection by a connecting element 7. The separate cultivation and/or transport table parts can therefore be supplied, transported and/or stored as a construction kit. The construction kit may comprise at least two connectable transverse and longitudinal profiles 5, 6 and the connecting element.

In Fig. 5, another embodiment of the invention is shown, wherein the attaching surface extends parallel to the first abutting surface 14. The connecting element 7 extends within the outer contour 18.

The invention relates in particular to horticulture. The connecting manner could also be used, in addition to cultivation and/or transport tables, in other frames that comprise such profiles, preferably in horticulture.

In the above specification, the transverse and longitudinal profile can be exchanged. In particular, the invention comprises a first and a second profile, while for instance the first profile can comprise a transverse or longitudinal profile, and the second profile a corresponding longitudinal or transverse profile, respectively, to be connected thereto. The corners between the first and second profiles can also be selected to be somewhat oblique instead of straight. The cultivation and/or transport table may also be provided with only two transverse profiles 6, 6A, for instance end transverse profiles 6A at the end faces.

Preferably, per connection, in particular per connecting profile, one connecting element 7 is sufficient for achieving the solid connection. However, several connecting elements 7 could also be used.

The variations described and many comparable variations, and combinations thereof are understood to fall within the framework of the invention. Naturally, different aspects of different embodiments and/or combinations thereof can be combined with each other and exchanged. There should thus be no limitation to only the embodiments mentioned.

## Claims

1. A method for constructing a cultivation and/or transport table (1), wherein a first and a second profile (5, 6) are interconnected at an angle, preferably an approximately straight angle, to each other for forming a cultivation and/or transport table frame (3),
wherein the first profile (6) and the second profile (5) are interconnected with the aid of a connecting element (7), and
**characterised in that** a profile part (11) of the first profile engages behind a profile part (12) of the second profile (5)
wherein the first profile (6) comprises a supporting surface (22); wherein the second profile (5) comprises a supporting surface (15); such that when engaging the profile part (11) behind the profile part (12), the supporting surface (22) abuts against supporting surface (15) to achieve a clamping of the first profile (6) in the second profile (5) allowing that the first profile (6) can slide along the supporting surface (15) of the second profile (5);
while the connecting element (7) prevents the profiles (5, 6) from sliding further relative to each other

2. A method according to claim 1, wherein during connection to the connecting element (7), the first profile (6) slides partly along the second profile (5).

3. A method according to claim 1, wherein the first profile (6) slides along a supporting surface (15) of the second profile (5), against an abutting surface (14) of the second profile (5), wherein the supporting surface is at an oblique angle to the abutting surface.

4. A method according to any one of the preceding claims, wherein during connection to the connecting element (7), the first profile (6) deforms, so that a clamping of the first profile in the second profile is achieved.

5. A method according to any one of the preceding claims, wherein at least said first and second profile (5, 6) of the cultivation and/or transport table (1) are disassembled for storage and/or transport.

6. A method according to any one of the preceding claims, wherein several of said cultivation and/or transport tables (1) can be guided over rails, and offer support to substrate with cultivating material.

7. A cultivation and/or transport table (1) provided with at least two profiles (5, 6), wherein a first and a second profile (5, 6) are interconnected at an angle, preferably an approximately straight angle, to each other and thus form at least a part of a cultivation and/or transport table frame (3),
wherein the first profile (6) and the second profile (5) are interconnected with the aid of a connecting element (7), and
**characterised in that** a profile part (11) of the first profile (6) engages behind a profile part (12) of the second profile (5),
wherein the first profile (6) comprises a supporting surface (22);
wherein the second profile (5) comprises a supporting surface (15);
such that when engaging the profile part (11) behind the profile part (12), the supporting surface (22) abuts against supporting surface (15) to achieve a clamping of the first profile (6) in the second profile (5) allowing that the first profile (6) can slide along the supporting surface (15) of the second profile (5);
such that when the connecting element (7) is connected the profiles (5, 6) are prevented from sliding further relative to each other.

8. A cultivation and/or transport table according to claim 7, wherein said profile part of the first profile (6) extends between profile parts of the second profile (5).

9. A cultivation and/or transport table according to claim 7 or 8, wherein the profiles (5, 6) comprise a longitudinal and a cross girder of a cultivation and/or transport table frame (3).

10. A cultivation and/or transport table according to any one of claims 7 - 9, wherein the connecting element (7) extends through the profiles (5, 6) and/or wherein the connecting element (7) extends within the outer contour of the cultivation and/or transport table frame (3).

11. A cultivation and/or transport table according to any one of claims 7 - 10, wherein the first profile (6) comprises at an and thereof a connecting profile (9) which extend in the same direction as the second profile (5).

12. A cultivation and/or transport table according to any one of claims 7 - 11, wherein the second profile (5) is provided with an abutting surface (14) against which the first profile (5) abuts at least partly and a supporting surface (15) on which the first profile (6) supports at least partly, wherein the supporting surface (15) extends at an oblique angle to the abutting surface (14).

13. A cultivation and/or transport table according to any one of claims 7 - 12, wherein the profiles (5, 6) are in contact with each other via at least three, preferably at least four surfaces of the second profile (5), wherein at least one of the surfaces involves an abutting surface and the other surfaces are at an angle with respect to the abutting surface and wherein preferably the first profile (6) extends at least partly between said other surfaces.

14. A construction kit for a cultivation and/or transport table according to any one of claims 7 - 13, provided with at least two of said first profiles (6), at least two of said second profiles (5) and said connecting element (7).

15. The use of a construction kit according to claim 14 and/or cultivation and/or transport table according to any one of claims 7 - 13 in a method according to any one of claims 1 - 6.

## Patentansprüche

1. Verfahren zum Aufbau eines Kultivierungs- und/oder Transporttisches (1), wobei ein erstes und ein zweites Profil (5, 6) in einem Winkel, vorzugsweise einem annähernd geraden Winkel, miteinander verbunden sind, um eine Kultivierung und/oder ein Transporttischgestell (3) zu bilden,
wobei das erste Profil (6) und das zweite Profil (5) mit einem Verbindungselements (7) miteinander verbunden sind, und
**dadurch gekennzeichnet, dass** ein Profilteil (11) des ersten Profils hinter einem Profilteil (12) des zweiten Profils (5) eingreift
wobei das erste Profil (6) eine Stützfläche (22) aufweist;
wobei das zweite Profil (5) eine Stützfläche (15) aufweist;
derart, dass beim Eingreifen des Profilteils (11) hinter dem Profilteil (12) die Stützfläche (22) an der Stützfläche (15) anliegt, um ein Festklemmen des ersten Profils (6) im zweiten Profil (5) zu ermöglichen, so dass das erste Profil (6) entlang der Stützfläche (15) des zweiten Profils (5) gleiten kann;
während das Verbindungselement (7) verhindert, dass die Profile (5, 6) weiter relativ zueinander gleiten

2. Verfahren nach Anspruch 1, bei dem das erste Profil (6) während des Verbindens mit dem Verbindungselement (7) teilweise entlang des zweiten Profils (5) gleitet.

3. Verfahren nach Anspruch 1, wobei das erste Profil (6) entlang einer Stützfläche (15) des zweiten Profils (5) gegen eine Anliegefläche (14) des zweiten Profils (5) gleitet, wobei die Stützfläche in einem schrägen Winkel zur Anliegefläche ist.

4. Verfahren nach einem der vorhergehenden Ansprüche, wobei sich das erste Profil (6) während des Verbindens mit dem Verbindungselement (7) verformt, so dass ein Festklemmen des ersten Profils im zweiten Profil erreicht wird.

5. Verfahren nach einem der vorhergehenden Ansprüche, bei dem mindestens das erste und das zweite Profil (5, 6) des Kultivierungs- und/oder Transporttisches (1) zur Lagerung und/oder zum Transport auseinandergebaut werden.

6. Verfahren nach einem der vorhergehenden Ansprüche, bei dem mehrere der Kultivierungs- und/oder Transporttische (1) über Schienen geführt werden können und dem Substrat mit Kultivierungsmaterial eine Unterstützung bieten.

7. Kultivierungs- und/oder Transporttisch (1), versehen mit mindestens zwei Profilen (5, 6), wobei ein erstes und ein zweites Profil (5, 6) in einem Winkel, vorzugsweise einem annähernd geraden Winkel, miteinander verbunden sind und somit mindestens einen Teil eines Kultivierungs- und/oder Transporttischgestells (3) bilden,
wobei das erste Profil (6) und das zweite Profil (5) mit einem Verbindungselements (7) miteinander verbunden sind, und
**dadurch gekennzeichnet, dass** ein Profilteil (11) des ersten Profils (6) hinter einem Profilteil (12) des zweiten Profils (5) eingreift,
wobei das erste Profil (6) eine Stützfläche (22) aufweist;
wobei das zweite Profil (5) eine Stützfläche (15) aufweist;
derart, dass beim Eingreifen des Profilteils (11) hinter dem Profilteil (12) die Stützfläche (22) an der Stützfläche (15) anliegt, um ein Festklemmen des ersten Profils (6) im zweiten Profil (5) zu ermöglichen, so dass das erste Profil (6) entlang der Stützfläche (15) des zweiten Profils (5) gleiten kann;
so, dass beim Verbinden des Verbindungselements (7) verhindert wird, dass die Profile (5, 6) weiter relativ zueinander gleiten.

8. Kultivierungs- und/oder Transporttisch nach Anspruch 7, wobei sich der Profilteil des ersten Profils (6) zwischen Profilteilen des zweiten Profils (5) erstreckt.

9. Kultivierungs- und/oder Transporttisch nach Anspruch 7 oder 8, wobei die Profile (5, 6) einen Längs- und einen Querträger eines Kultivierungs- und/oder Transporttischgestells (3) umfassen.

10. Kultivierungs- und/oder Transporttisch nach einem der Ansprüche 7 bis 9, wobei sich das Verbindungselement (7) durch die Profile (5, 6) erstreckt und/oder wobei sich das Verbindungselement (7) innerhalb der Außenkontur des Kultivierungs- und/oder Transporttischgestells (3) erstreckt.

11. Kultivierungs- und/oder Transporttisch nach einem der Ansprüche 7 bis 10, wobei das erste Profil (6) an einem Ende davon ein Verbindungsprofil (9) aufweist, das sich in derselben Richtung wie das zweite Profil (5) erstreckt.

12. Kultivierungs- und/oder Transporttisch nach einem der Ansprüche 7 bis 11, wobei das zweite Profil (5) mit einer Anliegefläche (14) versehen ist, gegen die das erste Profil (5) mindestens teilweise anliegt, und einer Stützfläche (15), auf die sich das erste Profil (6) mindestens teilweise stützt, wobei sich die Stützfläche (15) schräg zur Anlagefläche (14) erstreckt.

13. Kultivierungs- und/oder Transporttisch nach einem der Ansprüche 7 bis 12, wobei die Profile (5, 6) über mindestens drei, vorzugsweise mindestens vier Oberflächen des zweiten Profils (5) miteinander in Kontakt stehen, wobei es sich bei mindestens einer der Oberflächen um eine Anliegefläche handelt, und die anderen Flächen in einem Winkel in Bezug auf die Anliegefläche stehen, wobei sich das erste Profil (6) vorzugsweise mindestens teilweise zwischen den anderen Flächen erstreckt.

14. Bausatz für einen Kultivierungs- und/oder Transporttisch nach einem der Ansprüche 7 bis 13, versehen mit mindestens zwei der ersten Profile (6), mindestens zwei der zweiten Profile (5) und dem Verbindungselement (7).

15. Verwendung eines Bausatzes nach Anspruch 14 und/oder eines Kultivierungs- und/oder Transporttisches nach einem der Ansprüche 7 bis 13 in einem Verfahren nach einem der Ansprüche 1 bis 6.

## Revendications

1. Procédé de construction d'une table de culture et/ou de transport (1), dans lequel des premier et deuxième profils (5, 6) sont interconnectés à un angle, de préférence à un angle approximativement droit, l'un à l'autre pour former un cadre de table de culture et/ou de transport (3),
dans lequel le premier profil (6) et le deuxième profil (5) sont interconnectés à l'aide d'un élément de raccordement (7), et
**caractérisé en ce qu'**une partie de profil (11) du premier profil se met en prise derrière une partie de profil (12) du deuxième profil (5),
dans lequel le premier profil (6) comprend une surface de support (22) ;
dans lequel le deuxième profil (5) comprend une surface de support (15) ;
de sorte que, lors de la mise en prise de la partie de profil (11) derrière la partie de profil (12), la surface de support (22) vienne en butée contre la surface de support (15) pour réaliser un serrage du premier profil (6) dans le deuxième profil (5) en permettant au premier profil (6) de coulisser le long de la surface de support (15) du deuxième profil (5) ;
pendant que l'élément de raccordement (7) empêche que les profils (5, 6) ne coulissent davantage l'un par rapport à l'autre.

2. Procédé selon la revendication 1, dans lequel, au cours d'un raccordement à l'élément de raccordement (7), le premier profil (6) coulisse partiellement le long du deuxième profil (5).

3. Procédé selon la revendication 1, dans lequel le premier profil (6) coulisse le long d'une surface de support (15) du deuxième profil (5), contre une surface de butée (14) du deuxième profil (5), dans lequel la surface de support est à un angle oblique par rapport à la surface de butée.

4. Procédé selon l'une quelconque des revendications précédentes, dans lequel, au cours d'un raccordement à l'élément de raccordement (7), le premier profil (6) se déforme, de manière à réaliser un serrage du premier profil dans le deuxième profil.

5. Procédé selon l'une quelconque des revendications précédentes, dans lequel au moins lesdits premier et deuxième profils (5, 6) de la table de culture et/ou de transport (1) sont démontés à des fins de rangement et/ou de transport.

6. Procédé selon l'une quelconque des revendications précédentes, dans lequel plusieurs desdites tables de culture et/ou de transport (1) peuvent être guidées sur des rails, et assurent un support pour un substrat avec un matériau de culture.

7. Table de culture et/ou de transport (1) pourvue d'au moins deux profils (5, 6), dans laquelle des premier et deuxième profils (5, 6) sont interconnectés à un angle, de préférence à un angle approximativement droit, l'un à l'autre et forment ainsi au moins une partie d'un cadre de table de culture et/ou de transport (3),
dans laquelle le premier profil (6) et le deuxième profil (5) sont interconnectés à l'aide d'un élément de raccordement (7), et
**caractérisée en ce qu'**une partie de profil (11) du premier profil (6) se met en prise derrière une partie de profil (12) du deuxième profil (5),
dans laquelle le premier profil (6) comprend une surface de support (22) ;
dans laquelle le deuxième profil (5) comprend une surface de support (15) ;
de sorte que, lors de la mise en prise de la partie de profil (11) derrière la partie de profil (12), la surface de support (22) vienne en butée contre la surface de support (15) pour réaliser un serrage du premier profil (6) dans le deuxième profil (5) en permettant au premier profil (6) de coulisser le long de la surface de support (15) du deuxième profil (5) ;
de sorte que, lorsque l'élément de raccordement (7) est raccordé, les profils (5, 6) sont empêchés de coulisser davantage l'un par rapport à l'autre.

8. Table de culture et/ou de transport selon la revendication 7, dans laquelle ladite partie de profil du premier profil (6) s'étend entre des parties de profil du deuxième profil (5).

9. Table de culture et/ou de transport selon la revendication 7 ou 8, dans laquelle les profils (5, 6) comprennent une poutre longitudinale et une poutre transversale d'un cadre de table de culture et/ou de transport (3).

10. Table de culture et/ou de transport selon l'une quelconque des revendications 7 à 9, dans laquelle l'élément de raccordement (7) s'étend à travers les profils (5, 6) et/ou dans laquelle l'élément de raccordement (7) s'étend à l'intérieur du contour extérieur du cadre de table de culture et/ou de transport (3).

11. Table de culture et/ou de transport selon l'une quelconque des revendications 7 à 10, dans laquelle le premier profil (6) comprend, à une extrémité de celui-ci, un profil de raccordement (9) qui s'étend dans le même sens que le deuxième profil (5) .

12. Table de culture et/ou de transport selon l'une quelconque des revendications 7 à 11, dans laquelle le deuxième profil (5) est pourvu d'une surface de butée (14) contre laquelle le premier profil (5) vient en butée au moins partiellement et d'une surface de support (15) sur laquelle le premier profil (6) supporte au moins partiellement, dans laquelle la surface de support (15) s'étend à un angle oblique par rapport à la surface de butée (14).

13. Table de culture et/ou de transport selon l'une quelconque des revendications 7 à 12, dans laquelle les profils (5, 6) sont en contact l'un avec l'autre par l'intermédiaire d'au moins trois, de préférence au moins quatre, surfaces du deuxième profil (5), dans laquelle au moins l'une des surfaces implique une surface de butée et les autres surfaces sont à un angle par rapport à la surface de butée et dans laquelle, de préférence, le premier profil (6) s'étend au moins partiellement entre lesdites autres surfaces.

14. Kit de construction pour une table de culture et/ou de transport selon l'une quelconque des revendications 7 à 13, pourvu d'au moins deux desdits premiers profils (6), d'au moins deux desdits deuxièmes profils (5) et dudit élément de raccordement (7).

15. Utilisation d'un kit de construction selon la revendication 14 et/ou d'une table de culture et/ou de transport selon l'une quelconque des revendications 7 à 13 dans un procédé selon l'une quelconque des revendications 1 à 6.
